# EUROPEAN PATENT APPLICATION

(11) **EP 4 147 963 A1**
(43) Date of publication of application: **15.03.2023**
(21) Application number: 22020339.2
(22) Date of filing: 15.07.2022
(51) Int. Cl.: B63B 35/32, B63B 83/20

(54) **TECHNOLOGY AND EQUIPMENT FOR ACTIVE MONITORING AND COLLECTION OF PLASTIC WASTE FROM OUTDOOR AQUATIC SYSTEMS**

(30) Priority: 08.09.2021 RO 202100534
(71) Applicant: Institutul National de Cercetare Dezvoltare pentru Masini si Instalatii destinate Agriculturii si Industriei Alimentare-INMA, 013813 Bucuresti (RO)
(72) Inventor: Vladut, Nicolae Valentin, Corbeanca, Jud. Ilfov (RO); Paun, Anisoara, Bucuresti (RO); Caba, Ioan Ladislau, Timisoara, Jud. Timis (RO); Voicea, Iulian Florin, Otopeni, Jud. Ilfov (RO)
(74) Representative: Strenc, Alexandru Cristian

(57) **Abstract**

The invention relates to a mobile equipment with active monitoring and hydraulic drive for collecting plastic waste from the surface of reservoirs.

The equipment, according to the invention, consists of a marine platform made of two fishing boats (**1**) and (**2**) with a connecting platform (**3**) that will support the work equipment, consisting of a support (**4**) which supports a conveyor belt (**5**) made of braided mesh and equipped with two side chains that run on two axles (**6**) provided with chain wheels that are positioned using two bearings (**7**) with adjustment system. This conveyor belt is driven by a hydraulic motor (**8**). Also mounted on the support (**4**) is the collection belt (**9**) whose drive shaft (**10**) is kinematically coupled to the transport belt (**5**) by means of a Gall chain transmission (**11**). For the collection of plastic waste, this equipment is provided with two arms (**12**) which are articulated and adjusted using a tensioner (**13**) and actuated by hydraulic cylinders (**14**) to create the currents necessary to move the plastic waste in the direction of the collection belt (**9**). The equipment has a protective fencing (**15**). To produce the hydraulic energy necessary for the hydraulic motors on this equipment, the system is equipped with a hydraulic pump (**16**) driven by a gasoline heat engine (**17**) and an oil tank (**18**). In order to shred plastic waste to reduce the transport volume, the waste collecting equipment is provided with a special shredder (**19**) for plastic waste, which contains a knife drum (**20**) driven by a hydraulic motor (**21**). Two arms (**22**) are mounted on the support (**4**) that will support a large volume bag (**23**), which after filling will be lifted and discharged from the marine platform with a hydraulic crane (**24**). For movement, this equipment is provided with a boat engine (**25**) which is sized accordingly. To monitor the location of waste and depollution activity, this equipment is provided with a support table (**26**) and an Autel EVO II PRO 6K Rugged Bundle model drone (**27**), equipped with an Ultra HD-HDR camera, which ensures real-time radio transmission up to at a distance of 9 km, having a flight autonomy of max. 40 minutes. The images can be exported immediately after recording to the economic operator that serves the equipment and the operator can forward this information online to a local or national dispatch.

## Description

The invention relates to a mobile equipment with active monitoring and hydraulic drive for collecting plastic waste from the surface of reservoirs.

In the present state of the art, it is known the patent document US 200701582531 A1 relating to a transportable waste collection system for collecting waste found in a body of flowing water, the system having a flotation platform adapted to floating, a waste collection conveyor mounted on the platform having collection and discharge ends; a device for separating the waste from the body of flowing water and conveying the waste along the conveyor to the discharge end; a storage receptacle for storing the conveyed waste; and a water wheel interconnected with and providing power to the waste separation device.

Patent document US 20160185618 A1 is also known in the state of the art, which relates to a method and system for collecting plastic debris, intended for marine use. The system includes: a buoyant ring structure; various surface sheathings of plastic disposed on the buoyant ring structure and configured to be joined to a plastic debris; and a heating device disposed on the buoyant ring structure and configured to heat and join the plastic debris to one of the various surface sheathings of plastic.

Patent document US 20130119575 A1 is also known in the state of the art, which relates to a process and apparatus for recycling plastic waste material, including shredding the waste material in a universal shredder apparatus and washing the waste material.

Disadvantages of the solutions presented in the above patents consist in the fact that they are complex and expensive constructions, they have a low degree of manoeuvrability due to their large overall dimensions, they do not include a system for reporting the situation on the surface of the reservoirs, as well as the fact that they require additional equipment for transporting plastic waste.

Technical problem solved by the proposed solution, according to the invention, is to create autonomous mobile equipment, with active monitoring, that collects and shreds plastic waste and that is equipped with a hydraulic crane for discharging bags of shredded waste and that simultaneously monitors the reservoir before and after the end of the depollution operation using a drone system equipped with a 6K Ultra HD-HDR camera, for zonal photography of the reservoir surface and real-time data transmission to a data processing and storage dispatch.

The equipment for active monitoring and collection of plastic waste from acvacolic system, according to the invention, consists of a marine platform made of two fishing boats joined with a connecting platform that will support the work equipment, which consists of a collection belt and a conveyor belt mounted on a support and driven by a hydraulic motor. The plastic waste is discharged by the conveyor belt into the hopper of a shredder operated by a hydraulic motor and the shredded pieces end up in a large volume bag which is then unloaded by means of a hydraulic crane. The movement of the equipment is done with a properly sized boat engine and the hydraulic pump is driven by a gasoline heat engine. Reporting the situation and the depollution operation in real time is done with a drone equipped with a 6K, Ultra HD-HDR camera.

The equipment for active monitoring and collection of plastic waste from the acvacole system, according to the invention, has the following advantages:
- the main advantage is the reduction of the volume of plastic waste collected and the fact that no other supplementary boat is needed to transport it;
- real-time reporting on the situations of the polluted surfaces of the reservoirs, both before and after the depollution operation;
- increasing the degree of manoeuvrability and adjustment, compared to the technical solutions described in the patents mentioned above in the state of the art.

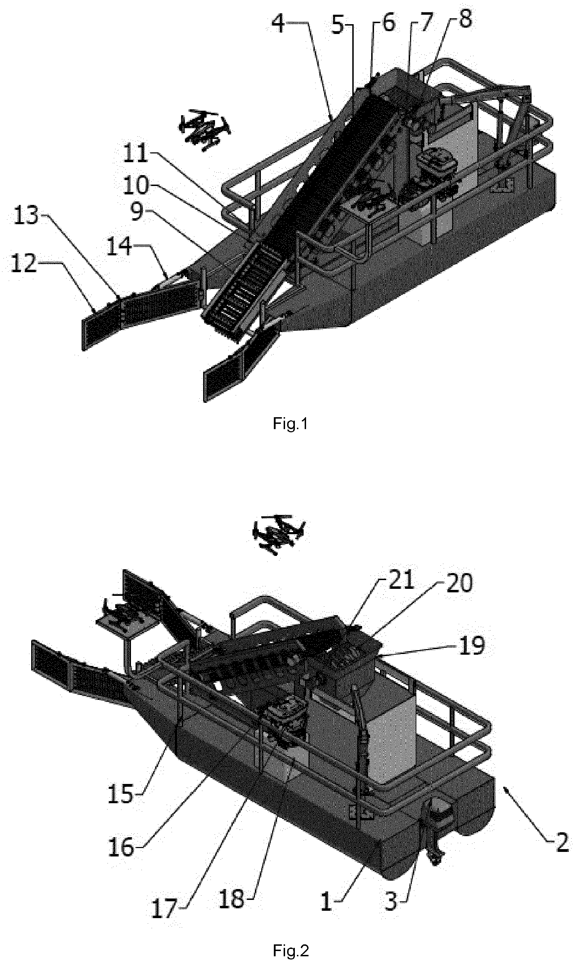

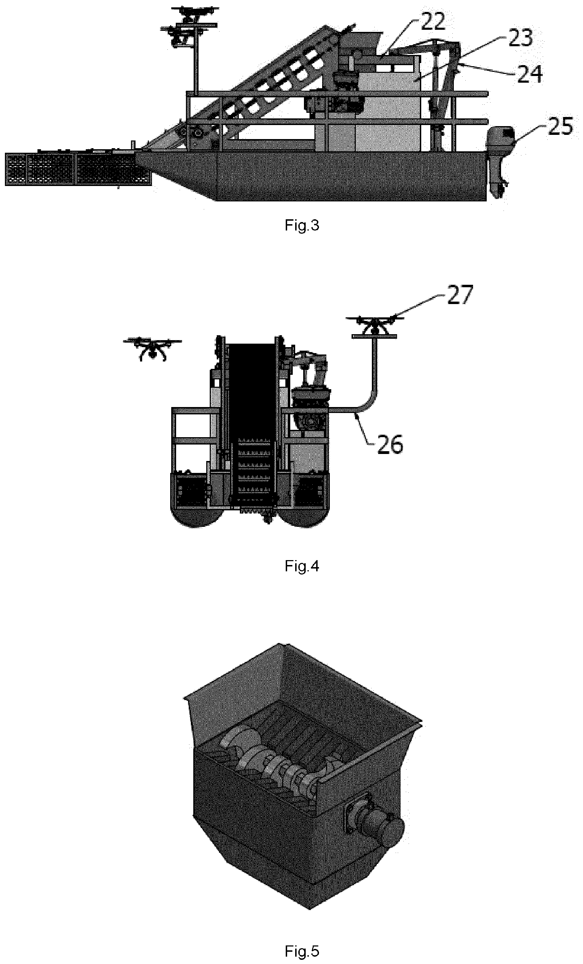

An embodiment of the invention is shown also in connection with the Figures 1-5, which represent:
- Fig.1 - Plastic waste collecting equipment - main view;
- Fig.2 - Plastic waste collecting equipment - rear view;
- Fig.3 - Plastic waste collecting equipment - lateral view;
- Fig.4 - Plastic waste collecting equipment - front view;
- Fig.5 - Plastic waste shredder.

The equipment for active monitoring and collection of plastic waste from acvacole system, according to the invention, consists of a marine platform made of two fishing boats **(1)** and **(2)** with a connecting platform **(3)** that will support the work equipment, consisting of a support **(4)** which supports a conveyor belt **(5)** made of braided mesh and equipped with two side chains that run on two axles **(6)** provided with chain wheels that are positioned using two bearings **(7)** with adjustment system. This conveyor belt is driven by a hydraulic motor **(8).** Also mounted on the support **(4)** is the collection belt **(9)** whose drive shaft **(10)** is kinematically coupled to the transport belt **(5)** by means of a Gall chain transmission **(11).** For the collection of plastic waste, this equipment is provided with two arms **(12)** which are articulated and adjusted using a tensioner **(13)** and actuated by hydraulic cylinders **(14)** to create the currents necessary to move the plastic waste in the direction of the collection belt **(9).** The equipment has a protective fencing **(15).** To produce the hydraulic energy necessary for the hydraulic motors on this equipment, the system is equipped with a hydraulic pump **(16)** driven by a gasoline heat engine **(17)** and an oil tank **(18).** In order to shred plastic waste to reduce the transport volume, the waste collecting equipment is provided with a special shredder **(19)** for plastic waste, which contains a knife drum **(20)** driven by a hydraulic motor **(21).** The profile of the knives **(20)** determines the "draw", compression and fragmentation of plastic waste into 2-3 cm pieces in order to reduce the volume for subsequent transport, while the drive system with hydraulic motor allows the shredder to be mounted on the plastic waste collecting equipment.

Two arms **(22)** are mounted on the support **(4)** that will support a large volume bag **(23),** which after filling will be lifted and discharged from the marine platform with a hydraulic crane **(24).** For movement, this equipment is provided with a boat engine **(25)** which is sized accordingly. To monitor the location of waste and depollution activity, this equipment is provided with a support table **(26)** and an Autel EVO II PRO 6K Rugged Bundle model drone **(27),** equipped with an Ultra HD-HDR camera, which ensures real-time radio transmission up to at a distance of 9 km, having a flight autonomy of max. 40 minutes. The images can be exported immediately after recording to the economic operator that serves the equipment and the operator can transmit this information online also to a local or national dispatch.

### References:

1. Waste collection system, patent US 200701582531 A1, 2009
2. Method and automated collection system for marine plastic debris, patent US 20160185618 A1, 2018.
3. Plastic Waste Recycling Apparatus and System, patent US 20130119575 A1, 2013

## Claims

1. Equipment for active monitoring and collection of plastic waste from acvacolic system, **characterized by the fact that** it consists of a marine platform made of two fishing boats **(1)** and **(2)** joined with a connecting platform **(3)** that will support the work equipment consisting of a support **(4)** which supports a conveyor belt **(5)** made of braided mesh and equipped with two side chains that run on two axles **(6)** provided with chain wheels that are positioned using two bearings **(7)** with adjustment system, the conveyor belt being driven by a hydraulic motor **(8),** and on support **(4)** is also mounted the collection belt **(9)** whose drive shaft **(10)** is kinematically coupled to the transport belt **(5)** by means of a Gall chain transmission **(11),** the equipment being provided with two arms **(12)** articulated and adjusted using a tensioner **(13)** and actuated by hydraulic cylinders **(14)** to create the currents necessary to move the plastic waste in the direction of the collection belt **(9)** thus making possible the collection of plastic waste.

2. Equipment for active monitoring and collection of plastic waste from acvacolic system, according to claim 1, **characterized by the fact that** it is provided with a special shredder **(19)** for plastic waste, which contains a knife drum **(20)** having profiles that determine the "draw", compression and fragmentation of the plastic waste into pieces, and is driven by a hydraulic motor **(21)** which allows the shredder to be mounted on the plastic waste collecting equipment.

3. Equipment for active monitoring and collection of plastic waste from acvacolic systems, according to claim 1, **characterized by the fact that** it is equipped with a drone **(27),** with certain technical characteristics, which ensures the recording of images and their live transmission, over a distance of a maximum of 9 km, with a flight autonomy of a maximum of 40 minutes, the images can be exported immediately after recording to the economic operator that serves the equipment and the operator can forward this information online to a local or national dispatch.
